# EUROPEAN PATENT APPLICATION

(11) **EP 1 953 748 A1**
(43) Date of publication of application: **06.08.2008**
(21) Application number: 08101206.4
(22) Date of filing: 01.02.2008
(51) Int. Cl.: G11B 7/09

(54) **Focus Servo Method used in optical Disc Drive**

(30) Priority: 02.02.2007 JP 2007024538
(71) Applicant: Mitsumi Electric Co., Ltd., Tama-shi, Tokyo 206-8567 (JP)
(72) Inventor: Takeuchi, Toshio Mitsumi Electric Co., Tama-Shi, Tokyo 206-8567 (JP); Tanaka, Toyoki Mitsumi Electric Co.,, , Tama-Shi, Tokyo 206-8567 (JP)
(74) Representative: Solf, Alexander

(57) **Abstract**

A focus servo method used in an optical disc drive which is capable of accurately recording data to an optical disc just after starting recording of data to the optical disc is provided. The method includes a step of detecting a command signal for recording data to an optical disc; adding a predetermined amount of an offset component to a focus error signal for displacing an objective lens to a proper position for recording the data to the optical disc; starting recording the data to the optical disc after the offset component has been added; and decreasing the amount of the added offset component from the focus error signal after staring the recording of the data to the optical disc. The detecting step and the adding step are sequentially carried out in a region indicated by "B" in FIG. 1 and the step of starting recording of data and the step of decreasing the offset are sequentially carried out in a region indicated by "C" in FIG. 1. These steps are carried out based on a control program in a control section for controlling the position of the objective lens to compensate for the change in focal point due to wavelength hopping when a laser is switched from reproducing power to recording power.

## Description

### BACKGROUND OF THE INVENTION

### Field of the Invention

This invention relates to a focus servo method used in an optical disc drive.

### Description of Related Art

In an optical disc drive which can record and reproduce data to and from an optical disc (hereinafter, simply referred to as "optical disc drive"), recording of data to an optical disc which is a recording medium is carried out using a laser beam emitted from a laser diode provided in an optical pick-up. The laser beam is focused by an objective lens of the optical pick-up and projected onto a recording surface of the optical disc so as to form a focused spot thereon. The adjustment of the size (diameter) of the spot of the laser beam is carried out by controlling a position of the objective lens so that a value of a focus error level (a level of a focus error signal) becomes zero. Namely, in order to maintain a distance between the recording surface of the optical disc and the objective lens, a focus servo control is carried out to control an amount of displacement of the objective lens. The distance is set so that the recording surface of the optical disc lies within a focal depth of the laser beam.

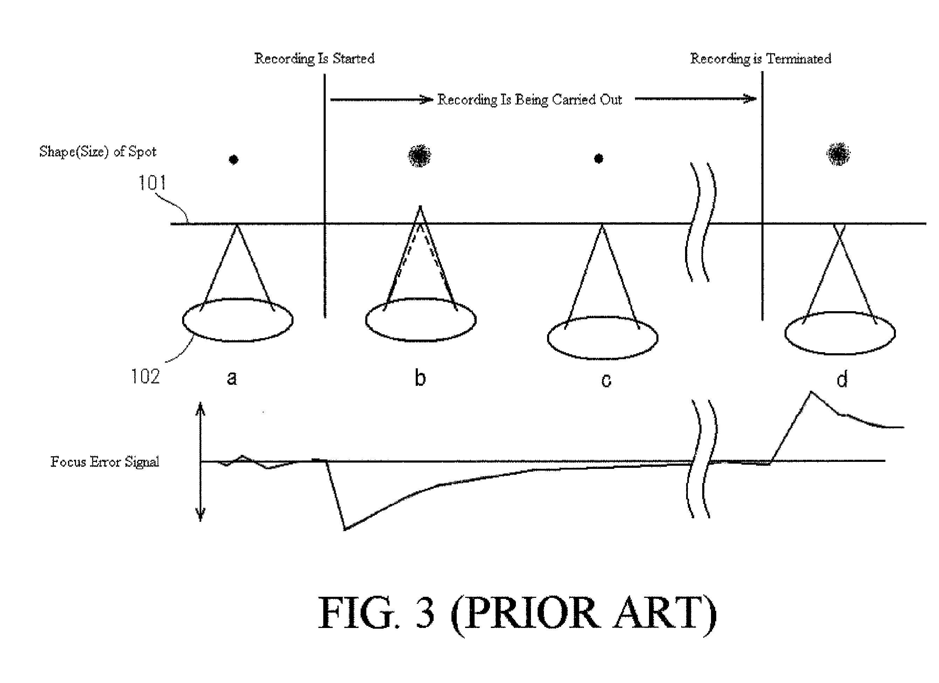

FIG. 3 is an illustration which explains a focus servo method used in a conventional optical disc drive, wherein a relation among a position of an objective lens 102, a recording surface 101 of an optical disc, and a size of a spot of a laser beam with the elapsed of time is shown in the order of regions "a", "b", "c" and "d". The region "a" shows a state that the optical disc drive reproduces data from the optical disc (hereinafter, referred to as "data reproducing state"), the region "b" shows a state that the optical disc drive has been transited from the data reproducing state to a data recording state, the region "c" shows a state that recording of data to the optical disc is being carried out in the data recording state, and the region "d" shows a state that the optical disc drive is returned to the data reproducing state from the data recording state.

In the region "a" which is a state of reproducing data from the optical disc, an amount of displacement of the objective lens 102 is controlled by the focus servo control so that the recording surface of the optical disc lies within a focal depth of the laser beam. Due to the implementation of the focus servo control, a focus error level of the focus error signal is extremely small.

Next, in the region "b" which is a state just after the optical disc drive has been transited from the data reproducing state to the data recording state, the recording surface 101 of the optical disc becomes abruptly out of the focal depth of the laser beam. This is because an amount of an energy of the laser beam during the data recording state is far greater than an amount of an energy of the laser beam during the data reproducing state, and thus a wavelength of the laser beam is hopped so that the focal point of the objective leans 102 is abruptly lengthened. With this result, the spot size of the laser beam becomes large to be a defocused state. Consequently, a focus error level of the focus error signal becomes extremely large.

Next, in the region "c" which is the data recording state, the position of the objective lens 102 in the region "b" is corrected to a proper position for recording the data to the optical disc since the focus servo is engaged. Namely, the objective lens 102 is displaced far away from the recording surface 101 of the optical disc for correcting the hopped focal point. Consequently, a focus error level of the focus error signal becomes small.

Next, in the region "d" which is a state just after the optical disc drive has been returned to the data reproducing state from the data recording state, the recording surface 101 of the optical disc is positioned abruptly out of the focal depth of the laser beam. This is because an amount of an energy of the laser beam during the data reproducing state is far smaller than an amount of an energy of the laser beam during the data recording state, and thus a wavelength of the laser beam becomes short so that the focal point of the objective leans 102 is abruptly shortened. With this result, the spot size of the laser beam becomes large to be a defocused state. Consequently, a focus error level of the focus error signal becomes extremely large. In this regard, it is to be noted that the position of the objective lens 102 is then corrected to a proper position for reproducing the data from the optical disc since the focus servo is engaged, and thus a focus error level of the focus error signal is also decreased.

As described above, in the conventional optical disc drive, just after the optical disc drive has been transited from the data reproducing state to the data recording state, the focal point of the objective lens 102 becomes extremely lengthened, and thus it takes a considerable time until the objective lens 102 is displaced to a proper position for recording the data to the optical disc with the focus serve control. Therefore, in the conventional optical disc drive, there is a problem in that it is impossible to record data to the optical disc accurately until the objective lens 102 is displaced to the proper position.

In order to solve the above-mentioned problem, it may be conceived that the objective lens 102 is designed as a finite conjugate lens system. However, in the case of an optical disc drive that can reproduce and record data from and to several kinds of optical discs such as CD-R, DVD-R, and the like, it is very difficult to design such a finite conjugate lens system. Further, as other approach, it may be conceived that an objective lens 102 having a small axial chromatic aberration is used so that an affect caused by changes in the wavelength of the laser beam which is caused by increase and decrease of an energy of the laser beam small can be made small. However, in this approach, in the case of an optical disc drive that can reproduce and record data from and to several kinds of optical discs such as CD-R, DVD-R, and the like, it is necessary to design an optical system having a small axial chromatic aberration so as to be applicable to the several kinds of optical discs. This leads to problems in that when such an optical system is manufactured, a number of parts such as correcting elements and the like is increased and that chromatic aberration characteristics other than axial chromatic aberration are deteriorated.

Further, in the case of an optical disc drive that can reproduce and record data from and to optical discs such as DVD-R and Blu-ray Disc which require high density data recording, in order to make the spot size of the laser beam at the recording surface of the optical disc extremely small, the wavelength of the laser beam must be short and therefore a focal point of the objective lens must also be extremely short. This leads to a problem in that since an amount of displacement of the objective lens 102 also becomes small, it is necessary to make various parts for driving the objective lens 102 extremely small. In this regard, it is to be noted that the enlarged sport size in the region "b" as described above gives an especially large adverse affect to the recording characteristics for such optical discs which require high density data recording.

### SUMMARY OF THE INVENTION

Accordingly, it is an object of the present invention to provide a focus servo method used in an optical disc drive which can carry out accurate data recording just after starting data recording to an optical disc.

In order to achieve the object, the present invention is directed to a focus serve method used in an optical disc drive. The method comprises: detecting a command signal for recording data to an optical disc; adding a predetermined amount of an offset component to a focus error signal for displacing an objective lens to a proper position for recording the data to the optical disc; starting recording the data after the offset component has been added; and decreasing the amount of the offset component from the focus error signal after staring recording the data to the optical disc.

According to the focus servo method of the present invention described above, the transition from the data reproducing state to the data recording state is carried out after the objective lens has been displaced to a proper position for recording data to the optical disc by adding the predetermined offset component to the focus error signal in the data reproducing state. Therefore, since the objective lens has been displaced at the proper position for recording the data to the optical disc, the laser beam is in a focused state that a focused spot is formed on the recording surface of the optical disc at the time when the data recording is started, thereby enabling the data recording to be carried out accurately.

Further, since the focus servo method includes the step of decreasing the amount of the offset component from the focus error signal after starting the recording of the data to the optical disc, the affect caused by the addition of the offset component can be excluded from the control for the position of the objective lens during the data recording state.

In the focus servo method according to the present invention, it is preferred that the predetermined amount of the offset component is set within a range of being capable of performing the focus servo control.

Therefore, even in the data recording state after detecting the command signal, it is still possible to carry out the data reproduction.

Further, in the focus servo method according to the present invention, it is also preferred that the predetermined amount of the offset component is selectable depending on characteristics of several kinds of optical discs to be loaded.

Therefore, in the case where the optical disc drive is of the type that can use several types of optical discs, it is possible to select an offset component suitable for an optical disc loaded in the optical disc drive. Therefore, it is possible to accurately record data to the loaded optical disc.

The above and other objects, features and advantages of the present invention will be apparent from the following description when taken in conjunction with the accompanying drawings which illustrates a preferred embodiment of the present invention by way of an example.

### BRIEF DESCRPTION OF THE DRAWINGS

FIG. 1 is an illustration which schematically shows with the elapsed of time the steps of the focus servo method used in an optical disc drive according to the present invention.

FIG. 2 is a flow-chart which shows a process of recording data to an optical disc according to the focus servo method of the present invention shown in FIG. 1.

FIG. 3 is an illustration which schematically shows with the elapsed of time the steps of the focus servo method used in the conventional optical disc drive.

### DETAILED DESCRPTION OF THE PREFERRED EMBODIMENTS

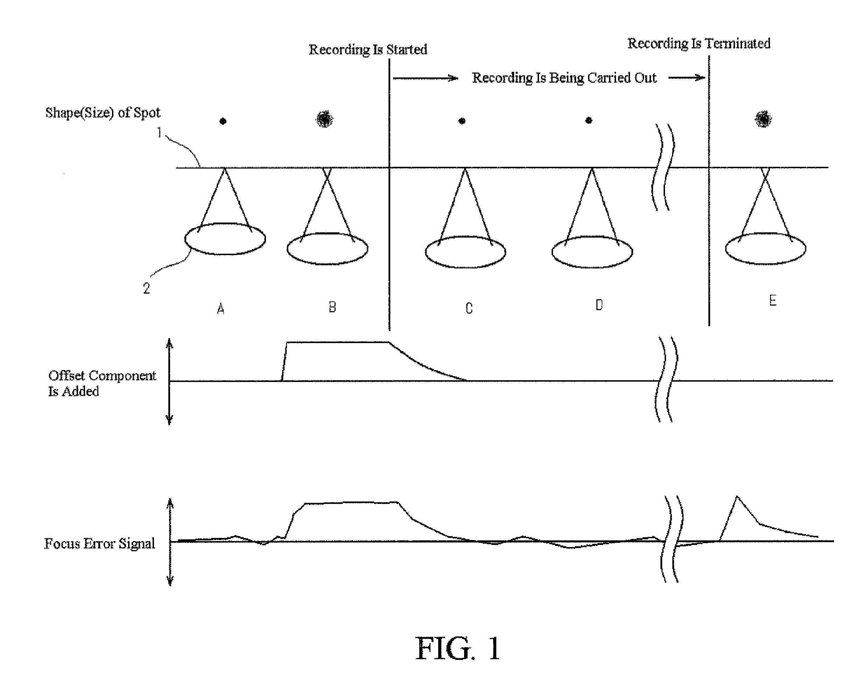

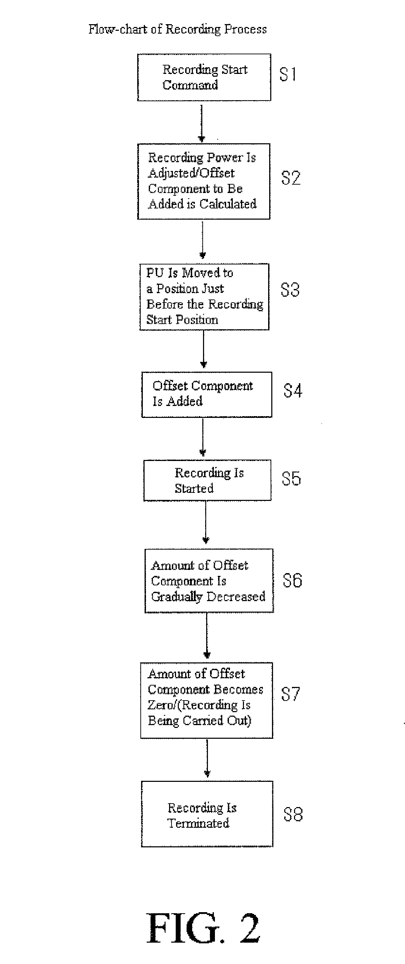

Hereinafter, an embodiment of a focus servo method used in an optical disc drive according to the present invention will be described in detail with reference to a preferred embodiment illustrated in FIG. 1 and FIG. 2.

The focus serve method used in an optical disc drive of the present invention is characterized by comprising: detecting a command signal for recording data to an optical disc; adding a predetermined amount of an offset component to a focus error signal for displacing an objective lens to a proper position for recording the data to the optical disc; starting recording the data after the amount of the offset component has been added to the focus error signal; and decreasing the amount of the added offset component from the focus error signal after staring recording the data to the optical disc.

FIG. 1 is an illustration which explains a focus servo method used in this embodiment, wherein states that a position of an objective lens 2 with respect to a recording surface 1 of an optical disc is controlled according to the focus servo method of the present invention are shown with the elapsed of time in the order of regions "A" , "B", "C" "D" and "E" . In this figure, the region "A" shows a state that the optical disc drive reproduces data from the optical disc (hereinafter, referred to as "data reproducing state", the region "B" shows a state just before the optical disc drive is transited from the data reproducing state to a data recording state in which recording of data to the optical disc is being carried out (hereinafter, referred to as "data recording state"), the region "C" shows a state just after the optical disc drive has been transited from the data reproducing state to the data recording state, the region "D" shows the data recording state, and the region "E" shows a state that the optical disc drive is returned to the data reproducing state from the data recording state.

In an optical disc drive in which the focus servo method of this embodiment is used, recording of data to an optical disc which is a recording medium is carried out using a laser beam emitted from a laser diode provided in an optical pick-up. The laser beam is focused by an objective lens of the optical pick-up and projected onto a recording surface 1 of the optical disc so as to form a spot thereon. The adjustment of the size (diameter) of the spot of the laser beam is carried out by controlling a position of the objective lens so that a value of a focus error level of the focus error signal becomes zero. Namely, in order to maintain a distance between the recording surface of the optical disc and the objective lens, a focus servo control is carried out to control an amount of displacement of the objective lens. The distance is set so that the recording surface of the optical disc lies within a focal depth of the laser beam.

As shown in FIG. 1, in the region "A" which is a state of reproducing data from the optical disc, an amount of displacement of the objective lens 2 is controlled by the focus servo control so that the recording surface 1 of the optical disc lies within a focal depth of the laser beam. In this state, the laser beam is focused so as to form a focused spot on the recording surface 1 of the optical disc due to the implementation of the focus servo control. Therefore, in this state, a focus error level of the focus error signal is extremely small.

Next, in the region "B", when a command signal for recording data is detected, a predetermined offset component (predetermined offset signal) is added to the focus error signal for displacing in advance the objective lens to a proper position for recording data to the optical disc. This is because an amount of an energy of the laser beam during the data recording state is far greater than an amount of an energy of the laser beam during the data reproducing state, and thus a wavelength of the laser beam is hopped so that the focal point of the objective leans 2 is abruptly lengthened.

In the conventional optical disc drive, when a command signal for recording data is detected, the conventional optical disc drive is immediately transited from the data producing state to the data recording state. In contrast, in this embodiment, the data recording state is established and maintained in the region "B". By adding the predetermined amount of the offset component to the focus error signal, the objective lens 2 is far away from the recording surface 1 of the optical disc. In this regard, it is to be noted that the amount of the offset component is set within the range that the focus servo can be engaged. Therefore, although the position of the objective lens 2 is away from an optimum position for reproducing the data from the optical disc, the focus servo can still be engaged at that position of the objective lens 2, and thus it is still possible to reproduce the data from the optical disc. In this regard, it is also to be noted that a focus error level of the focus error signal at this point of time is a positive value that moves the objective lens 2 to a position close to the recording surface 1 of the optical disc.

Next, after completing the addition of the offset component to the focus error signal in the region "B" so that the objective lens 2 has been displaced to the proper position for recording data to the optical disc, the recording of the data is started. This state is indicated by the region "C" where the objective lens 2 has already been displaced to the proper position for recording the data to the optical disc. This means that the laser beam has been already focused so as to form a focused spot on the recording surface 1 of the optical disc. Therefore, it is possible to immediately start recording the data to the optical disc accurately. Further, the amount of the offset component added to the focus error signal is decreased just after the recording of the data is started with a state that a focus servo is engaged. In this regard, it is to be noted that a speed of decreasing the offset component is determined according to a band of the focus error signal.

Next, in the region "D" which is a region that the decreasing of the offset component has been completed, the position of the objective lens 2 is still in the proper position for recording the data to the optical disc and the recording of the data is continuously carried out with a state that the focus servo is engaged. In this state, a focus error level of the focus error signal is extremely small.

Next, when a command signal for terminating the data recording is detected, the optical disc drive is transited from the data recording state to the data reproducing state indicated by the region "E". Just after the transition from the data recording state to the data reproducing state, since an amount of an energy of the laser beam during the data reproducing state is far smaller than an amount of an energy of the laser beam during the data recording state, a wavelength of the laser beam becomes short so that the focal point of the objective leans 2 is abruptly shortened. With this result, the position of the objective lens 2 is shifted from an optimum position for reproducing the data from the optical disc. However, even in such a state, since a focus servo can be engaged, it is still possible to reproduce the data from the optical disc.

In this regard, it is to be noted that the optical disc drive used in this embodiment is configured so that an amount of the offset component to be added to the focus error signal can be selected depending on the kinds of optical discs to be loaded. For example, in the case where the optical disc drive is of the type that can use four kinds of optical discs including DVD-R, CD-R, HD DVD, and Blu-ray, it is necessary for the optical disc drive to in advance have three different amounts of offset components suitable for the respective optical discs. In this example, the optical disc drive has three different amounts of offset components used for a wavelength of 660 nm for DVD-R, a wavelength of 780 nm for CD-R, and a wavelength of 405 nm for HD DVD and Blu-ray, respectively. This is because an amount of an offset component for displacing the objective lens 2 to a proper position for recording data to the optical disc is different depending on the wavelength used in recording the data to each optical disc. The selection of the proper amount of the offset component is carried out by discriminating the kind of the loaded optical disc by the optical disc drive.

Next, with reference to FIG 2, a description will be made with regard to a flow-chart which shows a data recording process to an optical disc by the focus servo method of the present invention. In this regard, it is to be noted that the implementation of each step in this flow-chart is carried out based on a control program for controlling a position of the objective lens 2 in a control section (not shown in the drawings).

First, when a command signal for recording data (recording start command) is detected, a recording start state is established (S1) . Next, a recording power is adjusted, that is, an amount of an offset component to be added is determined (S2). In this step, a kind of an optical disc loaded in the optical disc drive is discriminated so that an amount of offset component suitable for the loaded optical disc is selected. Next, an objective lens in an optical pick-up (PU) is moved under the focus servo control and the tracking servo control to a position just before the recording start position (S3). Next, a predetermined amount of an offset component that has been determined in the step (S2) is added to a focus error signal (S4) . The steps (S1 to S4) are sequentially implemented in the region "B" in FIG. 1.

Next, data recording is started (S5). This point corresponds to a recording start position in the region "C". At this point of time, the laser beam is in a focused state so as to form a focused spot on the recording surface 1 of the optical disc since the offset component has been added, and thus the data recording can be immediately carried out accurately. After stating the data recording, an amount of the offset component that has been added is gradually decreased (S6). After the amount of the offset component becomes zero, the data recording is continuously carried out (S7). The steps (S5 to S7) are sequentially carried out in the regions "C" and "D" in FIG. 1. When a command signal for terminating the data recording is detected, the recording of the data is terminated (S8). Then, the optical disc drive is transited from the data recording state to the data reproducing state which is indicated by the region "E".

Hereinbelow, a description will be made with regard to operation and function of the focus servo method used in the optical disc drive of the embodiment described above.

The focus servo method used in the optical disc drive of this embodiment comprises: detecting a command signal for recording data to an optical disc; adding a predetermined amount of an offset component to a focus error signal for displacing an objective lens to a proper position for recording the data to the optical disc; starting recording the data after the offset component has been added; and decreasing the amount of the added offset component from the focus error signal after staring recording the data to the optical disc.

Therefore, according to the focus servo method of this embodiment, the transition from the data reproducing state to the data recording state is carried out after the objective lens has been displaced to a proper position for recording data to the optical disc by adding the predetermined amount of the offset component to the focus error signal in the data reproducing state. Therefore, since the objective lens has been displaced at the proper position for recording the data to the optical disc, the laser beam is in a focused state that a focused spot is formed on the recording surface of the optical disc at the time when the data recording is started, thereby enabling the data recording to be carried out accurately.

Further, since the focus servo method includes the step of decreasing the amount of the offset component from the focus error signal after starting the recording of the data to the optical disc, the affect caused by the addition of the offset component can be excluded from the control for the position of the optical lens 2 during the data recording state.

Further, in the focus servo method used in the optical disc drive of this embodiment, the predetermined amount of the offset component is set within a range of being capable of performing the focus servo control. Therefore, even in the data recording state after detecting the command signal in the region "B", it is still possible to carry out the data reproduction.

Furthermore, in the focus servo method used in the optical disc drive of this embodiment, the predetermined amount of the offset component is selectable depending on characteristics of several kinds of optical discs to be loaded. Therefore, in the case where the optical disc drive is of the type that can use several types of optical discs, it is possible to select an offset component suitable for an optical disc loaded in the optical disc drive. Therefore, it is possible to accurately record data to the loaded optical disc.

Finally, it should be understood that the present invention is not limited to the preferred embodiment described hereinabove and, needless to say, a variety of modifications or variations may be made without departing from the scope of the invention defined in the following claims.

Further, it is also to be understood that the present disclosure relates to a subject matter contained in Japanese Patent Application No. 2007-024538 (filed on February 2, 2007) which is expressly incorporated herein by reference in its entirety.

## Claims

1. A focus serve method used in an optical disc drive, comprising;
detecting a command signal for recording data to an optical disc;
adding a predetermined amount of an offset component to a focus error signal for displacing an objective lens to a proper position for recording the data to the optical disc;
starting recording the data after the offset component has been added; and
decreasing the amount of the offset component from the focus error signal after staring recording the data to the optical disc.

2. The focus servo method as claimed in claim 1, wherein the predetermined amount of the offset component is set within a range of being capable of performing the focus servo control.

3. The focus servo method as claimed in claim 1, wherein the predetermined amount of the offset component is selectable depending on characteristics of several kinds of optical discs to be loaded.
